# EUROPÄISCHE PATENTSCHRIFT

(11) **EP 4 389 405 B1**
(45) Veröffentlichungstag und Bekanntmachung des Hinweises auf die Patenterteilung: **15.10.2025**
(21) Anmeldenummer: 23217682.6
(22) Anmeldetag: 18.12.2023
(51) Int. Cl.: B29D 30/06

(54) **VORRICHTUNG FÜR EINE REIFENHEIZPRESSE UND REIFENHEIZPRESSE**
DEVICE FOR A TIRE HEATING PRESS AND TIRE HEATING PRESS
DISPOSITIF POUR PRESSE DE VULCANISATION DE PNEUS ET PRESSE DE VULCANISATION DE PNEUS

(30) Priorität: 20.12.2022 DE 102022214093
(43) Veröffentlichungstag der Anmeldung: 26.06.2024
(73) Patentinhaber: Continental Reifen Deutschland GmbH, 30175 Hannover (DE)
(72) Erfinder: Wesebaum, Sören, 30175 Hannover (DE); Möller, Christian, 30175 Hannover (DE); Schöning, Max, 30175 Hannover (DE)
(74) Vertreter: Continental Corporation

(56) Entgegenhaltungen:
- JP-A- H04 250 008
- US-A- 4 744 739
- US-B2- 9 346 228

## Beschreibung

Die Erfindung betrifft eine Vorrichtung zur Verwendung bei einer eine Pressensäule, einen Pressenunterteil und einen mit einer oberen Öffnung versehenen Pressenoberteil aufweisenden Reifenheizpresse zum Vulkanisieren von Rohreifen oder runderneuerten Reifen,
wobei die Vorrichtung einen Pressenverschluss zum Verschließen der oberen Öffnung des Pressenoberteils und einen den Pressenverschluss zumindest in der geschlossenen Lage außen umgebenden und nach außen abschirmenden und auf dem Pressenoberteil positionierbaren Hitzeschutz aufweist,
wobei der Pressenverschluss und der Hitzeschutz an der Pressensäule um eine für beide Teile vorzugsweise gleiche Achse von der geöffneten in die geschlossene Lage und vice versa schwenkbar sind. Die Erfindung betrifft ferner eine Reifenheizpresse mit einer derartigen Vorrichtung.

Reifenheizpressen sind üblicherweise mit waagrecht positionierten Pressenunterteilen und Pressenoberteilen versehen und in unterschiedlichen Ausführungsvarianten bekannt. Die US 4,744,739 sowie die US 9,346,228 B2 zeigen und beschreiben derartige Reifenheizpressen. Bekannt ist ferner eine Reifenheizpresse, bei welcher die obere Öffnung am Pressenoberteil mit einem schweren metallischen Pressenverschluss verschließbar ist, an welchem innenseitig Formteile, beispielsweise jene, die eine der Seitenwände des Reifen formen, angeordnet sind. Es ist ferner bekannt, diesen Pressenverschluss mit einem Hitzeschutz in der Ausgestaltung einer hitzeabschirmenden Haube zu kombinieren, die gemeinsam mit dem Pressenverschluss an der Pressensäule angelenkt ist und mit diesem gemeinsam verschwenkbar ist. Durch diese Anordnung besteht das Risiko, dass Personen, etwa das Bedienpersonal, unbeabsichtigt mit dem heißen metallischen Pressenverschluss in Berührung kommen. Aus Sicherheitsgründen erfordert daher auch das Schließen und Öffnen der Heizpresse die Anwesenheit einer Bedienperson.

Der Erfindung liegt die Aufgabe zugrunde, eine Vorrichtung der eingangs genannten Art derart zu gestalten, dass der Schutz von Bedienpersonal und sonstigen Personen vor dem heißen Pressenverschluss optimiert ist und vor allem beim Schließvorgang verhindert wird, dass Berührungen des Pressenverschlusses möglich sind.

Gelöst wird die gestellte Aufgabe erfindungsgemäß dadurch, dass der Hitzeschutz derart nach oben offen ist, dass er unabhängig von einer Schließ- und Öffnungsbewegung des Pressenverschlusses schwenkbar ist.

Die Erfindung gestattet es, den Hitzeschutz bereits vor dem Schließen bzw. der Schließbewegung des Pressenverschlusses abzusenken, sodass beim Schließen des Pressenverschlusses der Hitzeschutz bereits auf dem Pressenoberteil positioniert ist. Das Risiko, dass Personen, Bedienpersonal und dergleichen, unbeabsichtigt mit dem Pressenverschluss in Berührung kommen ist daher wesentlich herabgesenkt. Darüber hinaus gestattet es die Erfindung, dass das Schließen und Öffnen des Pressenverschlusses ohne die Anwesenheit einer Bedienperson möglich ist und automatisiert durchgeführt werden kann.

Bei einer bevorzugten Ausgestaltung weist der Hitzeschutz einen an einer Stelle seines Umfanges unterbrochenen zylindermantelartig gestalteten Schutzschild und zwei von der unterbrochenen Stelle nach außen abgehende Seitenteile auf, mittels welcher der Hitzeschutz an der Pressensäule schwenkbar angelenkt ist.

Vorzugsweise besteht der Hitzeschutz aus einer oder mehreren Lage(n) Hitzeschutzmatte(n), somit aus einem leichten und Hitze gut abschirmendes Material.

Die Reifenheizpresse gemäß der Erfindung weist eine Pressensäule, einen Pressenunterteil und einen mit einer oberen Öffnung versehenen Pressenoberteil auf, wobei diese Teile waagrecht positioniert sind, und ist mit einer Vorrichtung gemäß einem oder mehreren der Ansprüche 1 bis 3 versehen.

Weitere Merkmale, Vorteile und Einzelheiten der Erfindung werden nun anhand der schematischen Zeichnung, die ein Ausführungsbeispiel darstellt, näher beschrieben. Dabei zeigen
Fig. 1 eine Ansicht einer Reifenheizpresse mit einem mitsamt einem Hitzeschutz in hochgeschwenkter Position befindlichem Pressenverschluss,
Fig. 2 die Reifenheizpresse aus Fig. 1 mit abgesenktem Hitzeschutz und in hochgeschwenkter Position befindlichem Pressenverschluss und
Fig. 3 die Reifenheizpresse aus Fig. 1 mit abgesenktem Hitzeschutz und abgesenktem, die Reifenheizpresse verschließenden Pressenverschluss.

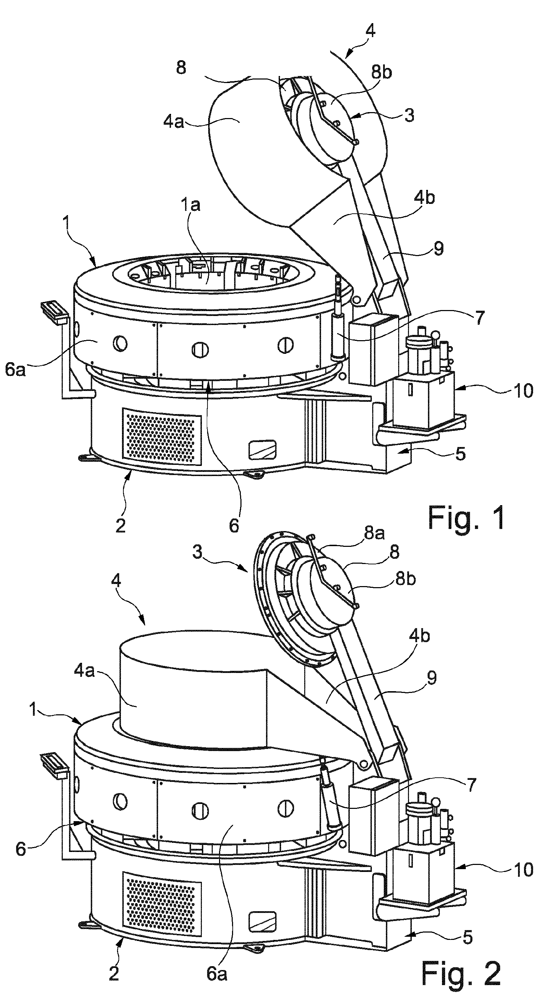

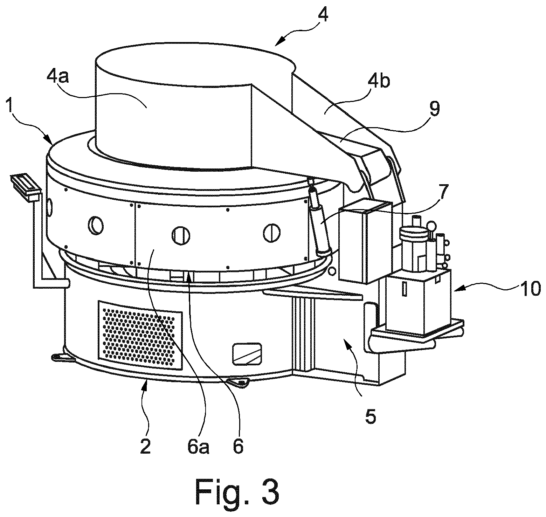

Die Figuren 1 bis 3 zeigen Ansichten einer herkömmlichen Reifenheizpresse, insbesondere einer Heizpresse zum Vulkanisieren des Laufstreifens und der Seitenwandbereiche von runderneuerten Nutzfahrzeugreifen, insbesondere Reifen für Lastkraftwagen. Die Reifenheizpresse weist einen Pressenoberteil 1 mit einer oberen, kreisförmigen Öffnung 1a, einen Pressenunterteil 2 sowie einen die Öffnung 1a verschließbaren Pressenverschluss 3 und einen Hitzeschutz 4 auf, welcher insbesondere aus einer oder mehreren Lagen Hitzeschutzmatten besteht. Der Pressenoberteil 1 und der Pressenunterteil 2 sind waagrecht positioniert und an einer Pressensäule 5 angeordnet bzw. mit dieser gekoppelt. Die Pressensäule 5, an welcher ein Hydraulikaggregat 10 angeordnet ist, ist nicht Gegenstand der Erfindung und wird daher im Detail nicht beschrieben.

Der Pressenoberteil 1 enthält Formteile zum Ausformen der einen Seitenwand des zu vulkanisierenden Reifens und weist einen Segmentring 6 mit in an sich bekannter Weise bewegbaren Segmenten 6a auf, deren Innenseiten Formteile zum Ausformen der Profilierung im Laufstreifen des Reifens aufweisen.

Der Pressenverschluss 3 ist gemeinsam mit dem Hitzeschutz 4 auf der Pressensäule 5 schwenkbar angelenkt. Mittels Betätigungsvorrichtungen, insbesondere mittels Hydraulikzylinder 7, von welchen einer dargestellt ist, sind der Pressenverschluss 3 und der Hitzeschutz 4 auf voneinander unabhängige Weise schwenkbar. Der Pressenverschluss 3 weist einen in Draufsicht kreisförmigen Deckel 8 mit einem kreisringartig umlaufenden Deckelrand 8a und einem mittigen zylindrischen Aufbau 8b auf. An der Unterseite des Deckels 8 sind die Formteile zum Ausformen der zweiten Seitenwand des zu vulkanisierenden Reifens vorhanden. Der Deckels 8 ist ferner derart gestaltet, dass er die obere Öffnung 1a am Pressenoberteil 1 dicht verschließt. Die Anlenkung des Deckels 8 an die Pressensäule 5 erfolgt über einen mit dem Deckel 8 fest verbundenen Arm 9.

Der Hitzeschutz 4 weist einen an einer Stelle unterbrochenen im Wesentlichen zylindermantelförmigen Schutzschild 4a und von der unterbrochenen Stelle zwei nach außen abgehende Seitenteile 4b auf, mittels welcher der Hitzeschutz 4 an der Pressensäule 5 schwenkbar angelenkt ist. Die Ausgestaltung und Dimensionierung des Hitzeschutzes 4 ist derart, dass der Hitzeschutz 4, wenn er auf die Oberseite des Pressenoberteils 1 abgesenkt ist, senkrecht stehend außerhalb der oberen Öffnung 1a positioniert ist. Die Seitenteile 4b sind derart gestaltet, dass sie bei mit dem Deckel 8 verschlossener Öffnung 1a seitlich des Arms 9 des Deckels 8 als Hitzeschild wirken. Sind der Pressenverschluss 3 und der Hitzeschutz 4 gemeinsam hochgeschwenkt, befindet sich der Pressenverschluss 3 ebenfalls innerhalb des Hitzeschutzes 4.

Fig. 1 zeigt den Pressenverschluss 3 mitsamt dem Hitzeschutz 4 in der hochgeschwenkten Lage. Der Deckel 8 befindet sich mitsamt seinem Arm 9 innerhalb des Hitzeschutzes 4. Soll daher die Heizpresse nach dem Einbringen eines Rohreifens oder eines runderneuerten Reifens geschlossen werden, wird zuerst der Hitzeschutz 4 verschwenkt bis er auf der Oberseite des Pressenoberteils 1 positioniert ist (Fig. 2). Im nächsten Schritt wird der Pressenverschluss 3 durch Verschwenken in seine geschlossene Lage gebracht. Zum Öffnen der Heizpresse nach erfolgter Vulkanisation wird vorerst vorzugsweise der Pressenverschluss 3 und anschließend der Hitzeschutz 4 hochgeschwenkt.

Zumindest das Öffnen und Schließen des Pressenverschlusses 3 erfolgt entsprechend gesteuert automatisch.

### Bezugszeichenliste

- 1: Pressenoberteil
- 1a: Öffnung
- 2: Pressenunterteil
- 3: Pressenverschluss
- 4: Hitzeschutz
- 4a: Schutzschild
- 4b: Seitenteil
- 5: Pressensäule
- 6: Segmentring
- 6a: Segment
- 7: Hydraulikzylinder
- 8: Deckel
- 8a: Deckelrand
- 8b: Aufbau
- 9: Arm
- 10: Hydraulikaggregat

## Patentansprüche

1. Vorrichtung zur Verwendung bei einer eine Pressensäule (5), einen Pressenunterteil (2) und einen mit einer oberen Öffnung (1a) versehenen Pressenoberteil (1) aufweisenden Reifenheizpresse zum Vulkanisieren von Rohreifen oder runderneuerten Reifen,
wobei die Vorrichtung einen Pressenverschluss (3) zum Verschließen der oberen Öffnung (1a) des Pressenoberteils (1) und einen den Pressenverschluss (3) zumindest in der geschlossenen Lage außen umgebenden und nach außen abschirmenden und auf dem Pressenoberteil (1) positionierbaren Hitzeschutz (4) aufweist,
wobei der Pressenverschluss und der Hitzeschutz an der Pressensäule (5) um eine für beide Teile vorzugsweise gleiche Achse von der geöffneten in die geschlossene Lage und vice versa schwenkbar sind,
**dadurch gekennzeichnet,**
**dass** der Hitzeschutz (4) derart nach oben offen ist, dass er unabhängig von einer Schließ- und Öffnungsbewegung des Pressenverschlusses (3) schwenkbar ist.

2. Vorrichtung nach Anspruch 1, **dadurch gekennzeichnet, dass** der Hitzeschutz (4) einen an einer Stelle seines Umfanges unterbrochenen zylindermantelartig gestalteten Schutzschild (4a) und zwei von der unterbrochenen Stelle nach außen abgehende Seitenteile (4b) aufweist, mittels welcher der Hitzeschutz (4) an der Pressensäule (5) schwenkbar angelenkt ist.

3. Vorrichtung nach Anspruch 1 oder 2, **dadurch gekennzeichnet, dass** der Hitzeschutz (4) aus einer oder mehreren Lage(n) Hitzeschutzmatte(n) besteht.

4. Reifenheizpresse mit einer Pressensäule (5), einem Pressenunterteil (2) und einem mit einer oberen Öffnung (1a) versehenen Pressenoberteil (1), wobei diese Teile waagrecht positioniert sind, und mit einer Vorrichtung gemäß einem oder mehreren der Ansprüche 1 bis 3.

## Claims

1. Device for use in a tyre heating press having a press column (5), a press lower part (2) and a press upper part (1) provided with an upper opening (1a) for vulcanizing tyre blanks or retreads,
wherein the device comprises a press closure (3) for closing the upper opening (1a) of the press upper part (1), and a heat protection (4) which at least in the closed position externally surrounds and externally shields the press closure (3) and is positionable on the press upper part (1),
wherein the press closure and the heat protection are pivotable on the press column (5) about an axis, which is preferably identical for both parts, from the opened to the closed position and vice versa,
**characterized in that**
the heat protection (4) is open towards the top in such a manner that it is pivotable independently of a closing and opening movement of the press closure (3).

2. Device according to Claim 1, **characterized in that** the heat protection (4) has a cylindrical jacket-like protective shield (4a), the latter being interrupted at a point of the circumference of the former and having two lateral parts (4b) which extend outwards from the interruption point and by means of which the heat protection (4) is pivotably articulated on the press column (5).

3. Device according to Claim 1 or 2, **characterized in that** the heat protection (4) consists of one or more layers of heat protection mats.

4. Tyre heating press having a press column (5), a press lower part (2) and a press upper part (1) provided with an upper opening (1a), wherein these parts are positioned horizontally, and having a device according to one or a plurality of Claims 1 to 3.

## Revendications

1. Dispositif destiné à être utilisé dans une presse à pneumatiques chauffante pour la vulcanisation de pneumatiques vierges ou de pneumatiques rechapés, comprenant une colonne de presse (5), une partie inférieure de presse (2) et une partie supérieure de presse (1) présentant une ouverture supérieure (1a),
le dispositif comprenant un obturateur de presse (3) pour fermer l'ouverture supérieure (1a) de la partie supérieure de presse (1) et un élément (4) de protection thermique qui entoure, au moins à l'extérieur, l'obturateur de presse (3) en position fermée, le protège vers l'extérieur et est apte à être positionné sur la partie supérieure de presse (1),
l'obturateur de presse et l'élément de protection thermique étant aptes à pivoter sur la colonne de presse (5), autour d'un axe de préférence identique pour les deux pièces, de la position ouverte à la position fermée et vice versa,
**caractérisé en ce que**
l'élément (4) de protection thermique est ouvert vers le haut de telle sorte qu'il est apte à pivoter indépendamment du mouvement de fermeture et d'ouverture de l'obturateur de presse (3).

2. Dispositif selon la revendication 1, **caractérisé en ce que** l'élément (4) de protection thermique est un bouclier de protection (4a) en forme d'enveloppe cylindrique interrompu en un emplacement de sa circonférence et deux parties latérales (4b) reliées à l'emplacement interrompu vers l'extérieur, au moyen desquelles l'élément de protection thermique (4) est articulé de manière pivotante sur la colonne de presse (5).

3. Dispositif selon la revendication 1 ou la revendication 2, **caractérisé en ce que** l'élément de protection thermique (4) est constitué d'une ou plusieurs couches de tapis de protection thermique.

4. Presse à pneumatiques chauffante comprenant une colonne de presse (5), une partie inférieure de presse (2) et une partie supérieure de presse (1) présentant une ouverture supérieure (1a), ces parties étant positionnées horizontalement, et étant équipée d'un dispositif selon une ou plusieurs des revendications 1 à 3.
